Europäisches Patentamt

European Patent Office

Office européen des brevets

(11) Numéro de publication: **0 349 680**
**A1**

## (12) DEMANDE DE BREVET EUROPEEN

(21) Numéro de dépôt: 88202765.9

(51) Int. Cl.⁴: **H04N 7/167**

(22) Date de dépôt: 02.12.88

(30) Priorité: 06.07.88 FR 8809165

(43) Date de publication de la demande:
**10.01.90 Bulletin 90/02**

(84) Etats contractants désignés:
**DE FR GB SE**

(71) Demandeur: **LA RADIOTECHNIQUE PORTENSEIGNE**
**51, Rue Carnot**
**F-92150 Suresnes(FR)**
(84) **FR**

Demandeur: **N.V. Philips' Gloeilampenfabrieken**
**Groenewoudseweg 1**
**NL-5621 BA Eindhoven(NL)**
(84) **DE GB SE**

(72) Inventeur: **Rakhodai, Issa SOCIETE CIVILE S.P.I.D.**
**209, rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

(54) Dispositif d'embrouillage ou de désembrouillage pour un système de télévision MAC.

(57) Ce dispositif décale les signaux dans le temps de quelques périodes d'horloge seulement, et ceci de façon continue pendant tout un groupe de lignes consécutives, y compris pendant les périodes de retours de lignes.

EP 0 349 680 A1

FIG.3

## Dispositif d'embrouillage ou de désembrouillage pour un système de télévision MAC

L'invention concerne un dispositif d'embrouillage ou de désembrouillage pour un système de télévision selon un standard MAC, constitué de moyens pour décaler dans le temps certaines des périodes de données numériques qui, dans une ligne, précèdent les signaux vidéo.

Un tel dispositif est connu du document US-A-4 636 851. Selon ce document, un signal MAC est embrouillé en découpant les salves numériques en plusieurs parties et en déplaçant certaines de ces parties, cependant que, de préférence, les blocs de signal analogique ne sont pas découpés.

Un tel procédé est compliqué à mettre en oeuvre, car il nécessite plusieurs mémoires, un contrôleur de mémoires et plusieurs sélecteurs électroniques.

La présente invention procure un dispositif dont l'avantage principal est son extrême simplicité. Elle est basée entre autres sur l'idée que, même si un retard très faible est appliqué aux périodes de données numériques, il a néanmoins pour effet que, si des mesures ne sont pas prises en réception pour compenser le retard, chaque bit des données numériques sera pris pour un autre, et le signal perdra toute signification. De ce fait, le son qui est transmis au moyen de ces données numériques devient totalement inutilisable sans désembrouilleur.

Le dispositif selon l'invention est ainsi remarquable en ce que les susdits moyens appliquent globalement un retard d'un nombre entier de bits à la salve complète de données numériques contenue dans une ou dans plusieurs lignes ou même à une ligne complète, période numérique comprise. Ce retard est avantageusement compris entre un bit et trente deux bits de données numériques. Le fait que le retard soit appliqué globalement simplifie au maximum la réalisation du dispositif tout en évitant tout problème de collision entre des données retardées et des données non retardées qui suivent. Le retard peut même être globalement appliqué à un groupe de lignes consécutives, l'application du retard commençant ou finissant par exemple pendant les 172 derniers bits d'une ligne comprise entre la ligne n° 2 et la ligne n° 22 incluses et respectivement finissant ou commençant pendant les 172 derniers bits d'une ligne comprise entre la ligne n° 314 et la ligne n° 334 incluses.

Un tel dispositif qui est particulièrement simple peut être utilisé dans les systèmes CMAC, DMAC ou D2MAC. Il est entre autres bien adapté dans le cas des réseaux câblés pour lesquels est recherchée une relative simplicité des moyens d'embrouillage/désembrouillage.

Le dispositif offre entre autres l'avantage qu'il peut être réalisé de façon indépendante du codeur ou du décodeur MAC.

Dans le cas où l'on applique le retardement à un groupe de lignes consécutives, si l'on veut accentuer l'effet d'embrouillage de l'image vidéo, il est intéressant que, en plus du retard, une inversion de polarité soit appliquée à celle des parties de trames qui ne comprend pas la ligne 624.

Les dispositifs en question sont aussi bien des dispositifs d'embrouillage que des dispositifs de désembrouillage ; la différence entre l'embrouillage et le désembrouillage tient essentiellement dans la période à laquelle est appliquée le décalage temporel. En d'autres termes le désembrouilleur devrait avancer les signaux là où ils ont été retardés, mais comme on ne sait pas remonter dans le temps c'est-à-dire avancer un signal, le désembrouilleur retarde les parties qui n'étaient pas retardées à l'émission afin de les remettre à leur place relative par rapport aux signaux retardés : en fin de compte donc, le désembrouilleur comporte les mêmes éléments que l'embrouilleur, mais avec une inversion logique au niveau de l'activation des moyens de retardement.

Il est souhaitable, pour éviter des problèmes d'accrochage de synchronisation, que le retard soit faible. Un re tard d'un bit suffit à détruire l'intelligibilité des données numériques.

La description qui va suivre, en regard des dessins annexés décrivant des exemples non limitatifs, fera bien comprendre comment l'invention peut être réalisée.

La figure 1 représente très schématiquement le branchement d'un dispositif selon l'invention dans un émetteur.

La figure 2 représente très schématiquement le branchement d'un dispositif selon l'invention dans un récepteur.

La figure 3 représente plus en détails un dispositif selon l'invention.

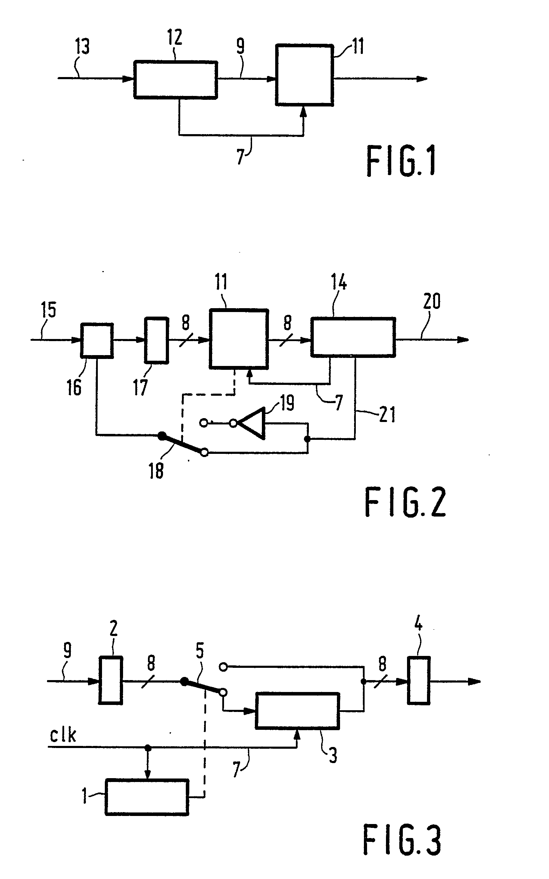

La figure 1 est susceptible de représenter à elle seule deux cas possibles d'un dispositif à l'émission.

Dans les deux cas le bloc 11 contient les moyens de l'invention.

Dans un premier cas un signal vidéo non codé MAC est disponible sur la connexion 13 et le bloc 12 est un codeur MAC qui fournit sur la connexion 9 le signal codé MAC sous forme analogique en bande de base, et qui fournit sur la connexion 7 l'horloge et la synchronisation.

Dans un autre cas, qui est celui des têtes de réseaux câblés, le signal disponible sur la connexion 13 est par exemple reçu à partir d'un satellite de télécommunications et est déjà codé MAC. Le bloc 12 représente alors un circuit d'extraction d'horloge et de synchronisation qui fournit ces dernières sur la connexion 7.

Sur la figure 2, un signal MAC analogique démodulé, c'est-à-dire en bande de base, est fourni sur la connexion 15 d'un récepteur, le circuit 16 est un circuit de réglage de la composante continue du signal; il est suivi d'un convertisseur analogique-numérique 17 puis d'un circuit désembrouilleur selon l'invention 11 et enfin d'un décodeur MAC 14, fournissant les composantes dites R, V, B et le son sur la connexion 20 multifils. Ce décodeur 14 fournit sur la connexion 7 l'horloge extraite à partir du signal. Le décodeur MAC extrait cette horloge à partir du mot de synchronisation de trames de la ligne 625, que le signal soit embrouillé ou non. Ceci est possible puisque le mot de synchronisation de trames est toujours laissé temporellement intact, et que l'inversion de polarité d'un signal duo-binaire ne modifie pas son contenu logique.

Une connexion 21 en sortie du décodeur 14 transmet une information de correction de la composante continue à partir de mesures effectuées de façon connue dans le décodeur MAC. Cette information est amenée au circuit 16 de réglage de la composante continue, formant un système à contre réaction. Au cas où la polarité du signal est changée pendant certaines périodes de la trame, l'information de correction de la composante continue doit aussi être inversée pendant la même période, faute de quoi la contre réaction agirait à l'envers. A cet effet, un inverseur 19 est mis en série ou court-circuité par l'intermédiaire d'un commutateur 18 commandé par le désembrouilleur. Ces éléments 18, 19 sont représentés à titre purement symbolique, car l'effet désiré peut être obtenu de différentes manières équivalentes. Par exemple il est possible que le signal 21 soit un signal numérique, auquel cas l'inversion de la valeur est obtenue par des moyens numériques.

La figure 3 représente plus en détails le bloc 11 des figures 1 et 2. Un signal MAC est amené sur la connexion 9 sous forme analogique et transformé en signal numérique par le convertisseur analogique-numérique 2, puis amené au commutateur 5. Si le circuit est situé dans un émetteur, le codeur MAC est placé en amont (voir figure 1) et s'il est à sortie numérique, le convertisseur 2 est bien entendu inutile et le signal est amené directement au commutateur 5. Il en est de même dans le cas de la figure 2 où est déja présent le convertisseur 17.

Après le commutateur 5, et selon la position de ce dernier, le signal traverse ou bien un circuit de retardement 3, ou bien un court-circuit. Là encore le commutateur 5 est représenté à titre symbolique, il est constitué en fait de portes logiques. En sortie le signal est reconverti en valeur analogique dans un convertisseur numérique/analogique 4 pour être modulé et transmis, dans le cas d'un émetteur.

Si le circuit est situé dans un récepteur dont le décodeur MAC (qui est en aval, voir figure 2) est à entrée numérique, le convertisseur 4 est bien entendu omis.

Un processeur 1 détermine les instants de commutation et commande le commutateur 5. Le circuit de retardement 3 est constitué d'un registre à décalage, commandé par une horloge. Par conséquent le retard peut être ajusté facilement à un nombre entier de bits de données. L'horloge est disponible sur la connexion 7 (voir figures 1 et 2). Elle est amenée aussi, bien entendu, au processeur 1.

Dans une forme de réalisation préférentielle, le registre 3 est à deux positions, l'horloge 7 ayant une fréquence de 20,25 MHz. Ainsi le retard apporté aux données numériques est de 1 bit.

Bien qu'un retard de 1 bit suffise à détruire totalement l'intelligibilité des données numériques, le retard peut être choisi plus important et le registre peut comporter plus de positions, par exemple 32 positions, si l'on souhaite accentuer l'effet de papillotement de l'image.

Toujours pour augmenter le brouillage de l'image, on peut ajouter une inversion de polarité du signal. Ceci peut être fait numériquement dans un élément (non représenté) inséré dans la chaîne des éléments 2, 5, 3, 4. Dans la plupart des cas, il suffit de modifier le bit de poids le plus fort du signal numérique pour obtenir l'effet désiré. Même si cette modification ne produit pas exactement une inversion de polarité, cela importe peu puisqu'en tout cas un brouillage est obtenu.

Pour obtenir la simplicité la plus grande ce brouillage supplémentaire peut être réalisé pendant les périodes où le retard est appliqué, ou au contraire pendant les périodes où le retard n'est pas appliqué, en tout cas les ins tants de commutation sont les mêmes pour les deux brouillages.

Le schéma de la figure 3 qui est déjà connu ne représente pas en fait l'essentiel de l'invention mais le moyen de la mettre en oeuvre. L'invention réside essentiellement dans les instants d'application du retard et dans sa valeur : le retard est appliqué selon l'invention à une salve complète de données numériques, et même de préférence à toute une ligne ou à un ensemble de lignes consécutives, ceci sans aucune solution de continuité. Considérant le diagramme représenté à la page 51 de la brochure officielle, "Spécification du système D2 MAC/PAQUET" éditée en septembre 1985, l'invention préconise de choisir un instant de commutation situé dans les lignes 2 à 22 ou 314 à 334.

Ces lignes sont en effet réservées actuellement à la transmission de données dites ANTIOPE et chaque ligne ne comprend que 360 bits de données au plus, laissant inutilisés 172 bits par ligne. On peut donc introduire une transition pendant ces 172 bits restant sans créer d'effet nuisible. Le retard sera donc appliqué par exemple entre la ligne 10 et la ligne 320, les autres lignes étant intactes : on applique le retard pendant une demi-trame par trame. On peut aussi retarder le signal entre la ligne 320 et la ligne 10 de la trame suivante, ce qui revient vis-à-vis du mot de synchronisation de trame à avancer les lignes 10 à 320.

L'avantage essentiel de l'invention est la simplicité de sa mise en oeuvre. Elle peut être utilisée par exemple dans des têtes de réseaux câblés. Le serveur peut alors se contenter d'embrouiller l'émission de façon à toucher l'utilisateur moyen sans chercher à arrêter un technicien capable d'intervenir dans son récepteur. Dans ces conditions on peut éventuellement ne pas déclencher les retardements à partir d'un générateur pseudo-aléatoire ainsi que cela se pratique de façon courante, mais appliquer le retard à chaque demi-trame ou à des demi-trames particulières identifiées par un calcul basé sur le comptage des trames, ce calcul étant en tout cas systématique et non pseudo-aléatoire. Dans ce cas le récepteur peut à lui seul désembrouiller le signal sans clé ou autre donnée transmise par l'émetteur. Il importe toutefois qu'il soit capable de reconnaître s'il y a ou non brouillage. On a remarqué que, lorsque le taux d'erreur sur les données numériques est d'environ 1 millième, le signal est quasiment parfait. Lorsque ce taux atteint 1 centième le signal est très mauvais et au-delà l'accrochage de synchronisation n'est plus possible. Or le brouillage selon l'invention introduit, lorsqu'on applique un retard pendant une demi-trame par trame, un taux d'erreur de 25% (la moitié des données est embrouillée et dans cette moitié, le hasard fait que la moitié des bits sont corrects, d'où le taux de 25% de bits erronés). Un moyen de détection de la présence de l'embrouillage est donc de munir le récepteur de moyens de relevé du taux d'erreur. Il y a alors trois cas possibles :
- taux d'erreur inférieur à 1 centième : pas d'embrouillage
- taux d'erreur compris entre 1 centième et 25% : l'accrochage est impossible, pas de réception
- taux d'erreur de l'ordre de 25% et accrochage correctement réalisé : les conditions de réception sont convenables mais il y a embrouillage.

Bien entendu, il est également possible d'utiliser les données numériques pour transmettre de façon connue des informations sur l'embrouillage.

**Revendications**

1. Dispositif d'embrouillage ou de désembrouillage pour un système de télévision selon un standard MAC, constitué de moyens pour décaler dans le temps certaines des périodes de données numériques qui, dans une ligne, précèdent les signaux vidéo, caractérisé en ce que lesdits moyens appliquent globalement un retard d'un nombre entier de bits à la salve complète de données numériques contenue dans une ou dans plusieurs lignes.

2. Dispositif selon la revendication 1, caractérisé en ce que lesdits moyens appliquent globalement le retard à au moins une ligne complète.

3. Dispositif selon la revendication 2, caractérisé en ce que lesdits moyens appliquent globalement le retard à un groupe de lignes consécutives.

4. Dispositif selon la revendication 3, caractérisé en ce que lesdits moyens appliquent globalement le retard aux lignes correspondant à une demi-trame, l'application du retard commençant ou finissant pendant les 172 derniers bits d'une ligne comprise entre la ligne n° 2 et la ligne n° 22 incluses et respectivement finissant ou commençant pendant les 172 derniers bits d'une ligne comprise entre la ligne n° 314 et la ligne n° 334 incluses.

5. Dispositif selon la revendication 4, caractérisé en ce que en plus du retard, une inversion de polarité est appliquée à celle des parties de trames qui ne comprend pas la ligne 624.

6. Dispositif selon l'une quelconque des revendications 1 à 5, caractérisé en ce que le retard global est compris entre un bit et trente deux bits de données numériques.

7. Dispositif selon la revendication 6, caractérisé en ce que le retard global est d'un bit seulement.

8. Dispositif selon l'une quelconque des revendications 1 à 7, caractérisé en ce qu'il est muni en réception de moyens de relevé du taux d'erreurs numériques pour détecter s'il y a brouillage ou non.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 099 691 (DIGITAL VIDEO SYSTEMS CORP.)<br>* Page 3, lignes 9-24; page 5, lignes 18-30; page 9, lignes 19-33; figures 1-3 *<br>--- | 1-3 | H 04 N 7/167 |
| A | ELECTRONICS & WIRELESS WORLD, vol. 93, no. 1613, mars 1987, pages 263-265, Sutton, Surrey, GB; T. IVALL: "Satellite systems"<br>* Page 263, colonne de droite, lignes 7-68 *<br>--- | 1-4 | |
| A | EP-A-0 160 595 (SOCIETE D'ELECTRONIQUE DE LA REGION PAYS DE LOIRE-SEREL)<br>* Page 3, lignes 20-27; revendication 1;. figure 1 *<br>--- | 1-3,6 | |
| A | GB-A-2 186 768 (EMC DATACARE LTD)<br>* Page 1, lignes 36-42; page 1, ligne 117 - page 2, ligne 12 *<br>----- | 1 | |

**DOMAINES TECHNIQUES RECHERCHES (Int. Cl.4)**

H 04 N

Le présent rapport a été établi pour toutes les revendications

| Lieu de la recherche | Date d'achèvement de la recherche | Examinateur |
|---|---|---|
| LA HAYE | 21-03-1989 | KLUZ F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)